# EUROPÄISCHE PATENTANMELDUNG

(11) **EP 2 123 920 A2**
(43) Veröffentlichungstag der Anmeldung: **25.11.2009**
(21) Anmeldenummer: 09004146.8
(22) Anmeldetag: 24.03.2009
(51) Int. Cl.: F16B 13/14

(54) **Adapter zum Einbringen von Klebstoff aus einer Injektionsdüse in einen Leichtbauplattenbefestiger**

(30) Priorität: 21.05.2008 DE 102008024690
(71) Anmelder: fischerwerke GmbH & Co. KG, 72178 Waldachtal (DE)
(72) Erfinder: Herbstreit, Rolf, 72178 Waldachtal (DE); Schillinger, Peter, 72224 Ebhausen (DE); Vondra, Lukas, 75201 Kojetin (CZ)

(57) **Zusammenfassung**

Die Erfindung betrifft einen Adapter (11) zum Einbringen von Klebstoff aus einer Injektionsdüse (10) in einen Leichtbauplattenbefestiger (5). Der Adapter (11) weist eine Aufnahme (12) zum dichten Ansetzen der Injektionsdüse (10), eine Anlage (15) für die Leichtbauplatte (1) und eine Anlage (16) für den Leichtbauplattenbefestiger (5) auf. Die Anlage (16) hält den Leichtbauplattenbefestiger (5) gegen Verdrängen durch den eingebrachten Klebstoff in der Leichtbauplatte (1) und die Anlagen (15, 16) dichten ab gegen Austritt von Klebstoff aus der Leichtbauplatte (1).

## Beschreibung

Die Erfindung betrifft einen Adapter zum Einbringen von Klebstoff aus einer Injektionsdüse in einen Leichtbauplattenbefestiger mit den Merkmalen des Oberbegriffs des Anspruchs 1.

Leichtbauplatten sind Platten mit zwei Deckplatten beispielsweise aus Holz oder Kunststoff, zwischen denen eine Zwischenschicht angeordnet ist, der die beiden Deckplatten verbindet. Die Zwischenschicht kann beispielsweise ein fester Schaum sein oder Waben aufweisen, in letzterem Fall spricht man von einer Wabenplatte. Ist nachfolgend von einer Wabenplatte die Rede, sollen darunter allgemein auch Leichtbauplatten verstanden werden. Leichtbauplatten werden beispielsweise von der Möbelindustrie verwendet.

Um eine Leichtbauplatte mit einer anderen Leichtbauplatte oder einem sonstigen Bauteil zu verbinden, muss ein Befestiger an oder in der Leichtbauplatte befestigt werden, beispielsweise muss eine Schraube in die Leichtbauplatte eingeschraubt werden. Wegen der geringen Festigkeit der Zwischenschicht der Leichtbauplatte ist der Halt der Schraube in der Leichtbauplatte mäßig.

Deswegen gibt es sog. Leichtbauplattenbefestiger, die beispielsweise hülsenförmig sind und in ein Bohrloch gesteckt werden, das durch eine der Deckplatten in die Zwischenschicht der Leichtbauplatte gebohrt worden ist. In den Leichtbauplattenbefestiger wird Klebstoff eingebracht, der durch Klebstoffaustrittsöffnungen in die Leichtbauplatte austritt und den Leichtbauplattenbefestiger mit der Leichtbauplatte verbindet. Die Klebstoffaustrittsöffnungen sind so angeordnet, dass der Klebstoff im Bereich der durchbohrten Deckplatte, vorzugsweise auch an der Innenseite der nicht durchbohrten Deckplatte und eventuell auch in der Zwischenschicht austritt, so dass der Klebstoff den Leichtbauplattenbefestiger mit vorzugsweise beiden Deckplatten und eventuell zusätzlich mit der Zwischenschicht verbindet. Zur Befestigung eines Bauteils an der Leichtbauplatte kann eine Schraube in den Klebstoff im Leichtbauplattenbefestiger eingeschraubt werden, wobei der Klebstoff beim Einschrauben der Schraube noch nicht (voll) ausgehärtet sein muss.

Klebstoff kann hier verallgemeinernd als fließfähiger, insbesondere pastöser und aushärtender, Ein- oder Mehrkomponenten-Werkstoff aufgefasst werden, der den Leichtbauplattenbefestiger stoffschlüssig mit der Leichtbauplatte verbindet.

Das Einbringen des Klebstoffs in den Leichtbauplattenbefestiger erfolgt durch eine Injektionsdüse, die beispielsweise auch ein Statikmischer sein kann. Bekannte Leichtbauplattenbefestiger sind rohr- oder hülsenförmig und weisen eine offene Stirnseite auf, deren Mündung eine Klebstoffeinfüllöffnung des Leichtbauplattenbefestigers bildet. Die Injektionsdüse, die üblicherweise ein konisches oder zylindrisches Rohr aufweist, wird an der Mündung, die die Klebstoffeinfüllöffnung des Leichtbauplattenbefestigers bildet, angesetzt und der Klebstoff wird durch die Injektionsdüse in den Leichtbauplattenbefestiger eingebracht.

Aufgabe der Erfindung ist, einen Adapter vorzuschlagen, um den Klebstoff aus der Injektionsdüse in den Leichtbauplattenbefestiger zu leiten und/oder den Leichtbauplattenbefestiger bündig oder versenkt in der Leichtbauplatte zu positionieren und während des Einbringens des Klebstoffs zu halten. Letztere Aufgabe stellt sich bei Leichtbauplattenbefestigern, die keinen Flansch aufweisen, der auf der durchbohrten Deckplatte der Leichtbauplatte aufliegt.

Diese Aufgabe wird durch die Merkmale des Anspruchs 1 gelöst. Der erfindungsgemäße Adapter weist eine Aufnahme zum dichten Ansetzen der Injektionsdüse auf. Als Aufnahme kann der Adapter eine beispielsweise hohlkonische oder hohlrunde, ringförmige Mündung aufweisen, an der die Injektionsdüse mit einer Andruckkraft angesetzt werden kann, um den Klebstoff einzubringen. Das Ansetzen der Injektionsdüse an der Aufnahme des Adapters muss nicht absolut dicht sein, ein begrenzter Klebstoffaustritt an dieser Stelle kann akzeptabel sein. Eine weitere Möglichkeit zur Verwirklichung der Aufnahme kann eine Ausbildung des Adapters als Kupplung sein, so dass der Adapter auf die Injektionsdüse steckbar oder in anderer Weise aufsetzbar ist. Die Aufnahme des Adapters ist also wie bei einer Stecker-Kupplung-Verbindung kongruent zur Injektionsdüse.

Des weiteren weist der erfindungsgemäße Adapter eine Anlage für den Leichtbauplattenbefestiger und eine Anlage für die Leichtbauplatte auf. Soll der Leichtbauplattenbefestiger bündig mit der durchbohrten Deckplatte der Leichtbauplatte gesetzt werden, sind die beiden Anlagen in einer Ebene, soll der Leichtbauplattenbefestiger versenkt in der durchbohrten Deckplatte der Leichtbauplatte gesetzt werden, springt die Anlage für den Leichtbauplattenbefestiger über die Anlage für die Leichtbauplatte vor. Die Anlagen des erfindungsgemäßen Adapters sind beispielsweise konzentrische Ringscheibenflächen auf einer Stirnseite des Adapters; für ein mit der durchbohrten Deckplatte der Leichtbauplatte bündiges Setzen des Leichtbauplattenbefestigers befinden sich die beiden Ringscheibenflächen in einer Ebene und bilden somit eine gemeinsame Ringscheibenfläche.

Zum Einbringen von Klebstoff in einen Leichtbauplattenbefestiger wird der Leichtbauplattenbefestiger in ein zuvor gebohrtes Loch in der Leichtbauplatte gesteckt und der Adapter wird mit seiner Anlage für den Leichtbauplattenbefestiger an diesem und mit seiner Anlage für die Leichtbauplatte an einem das Bohrloch umgebenden Rand der Deckplatte der Leichtbauplatte angesetzt. Der Leichtbauplattenbefestiger wird dadurch in der Tiefe positioniert und beim Einbringen von Klebstoff in der vorgesehenen Position gehalten. Außerdem bewirkt der Adapter durch seine Anlage am Leichtbauplattenbefestiger und an der Deckplatte der Leichtbauplatte eine Abdichtung, um einen Klebstoffaustritt auf eine Oberfläche der Leichtbauplatte zu vermeiden. Die Injektionsdüse wird - vor oder nach dem Ansetzen des Adapters am Leichtbauplattenbefestiger und an der Leichtbauplatte - an der Aufnahme des Adapters angesetzt und es wird Klebstoff aus der Injektionsdüse durch den Adapter in den Leichtbauplattenbefestiger eingebracht.

Der erfindungsgemäße Adapter hat den bereits genannten Vorteil, dass er den Leichtbauplattenbefestiger in einer vorgesehenen Tiefe im Loch in der Leichtbauplatte positioniert und während des Einbringens des Klebstoffs in dieser Position hält. Weiterer, ebenfalls bereits genannter Vorteil ist, dass der Adapter ein Austreten von Klebstoff auf die Oberfläche der Leichtbauplatte vermeidet. Ein zusätzlicher Vorteil der Erfindung ist die Anpassung der Injektionsdüse an den Leichtbauplattenbefestiger, der erfindungsgemäße Adapter ermöglicht das Einbringen von Klebstoff in den Leichtbauplattenbefestiger mit einer an sich nicht zum Leichtbauplattenbefestiger passenden Injektionsdüse.

Eine Ausgestaltung der Erfindung sieht eine oder mehrere exzentrische Klebstoffaustrittsöffnungen des Adapters vor. Dadurch ist es möglich, Klebstoff in einen Leichtbauplattenbefestiger einzubringen, der einen (stiftförmigen) Kern in seiner Längsmitte aufweist. Ein solcher Kern hält die Längsmitte des Leichtbauplattenbefestigers frei von Klebstoff und bildet ein Schraubloch, das eine Schraube beim Einschrauben führt und ein Einschrauben ohne Vorbohren in den ausgehärteten Klebstoff ermöglicht.

Eine Ausgestaltung der Erfindung sieht einen Injektionsfortsatz des Adapters vor, der über die Anlage für den Leichtbauplattenbefestiger vorsteht. Ist der Adapter mit seiner Anlage am Leichtbauplattenbefestiger angesetzt, ragt der Injektionsfortsatz in den Leichtbauplattenbefestiger hinein. Das ermöglicht das Einbringen von Klebstoff in einem Längsmittelbereich des Leichtbauplattenbefestigers anstatt mündungsnah, damit sich der Klebstoff besser über die Länge des Leichtbauplattenbefestigers verteilt und auch an dessen der Klebstoffeinfüllöffnung fernen Ende, also auf der Seite der nicht gebohrten Deckplatte der Leichtbauplatte, austritt. Des Weiteren formt der Injektionsfortsatz einen Hohlraum im Klebstoff im Leichtbauplattenbefestiger zum Einschrauben einer Schraube. Das ermöglicht das Einschrauben von Schrauben ohne Schraubenspitze, die ein stumpfes vorderes Ende aufweisen, und von Schrauben mit großen Durchmesser bzw. großem Kerndurchmesser.

Zur Erzielung desselben Zwecks sieht eine andere Ausgestaltung der Erfindung vor, den Adapter so auszubilden, dass er die Injektionsdüse so aufnimmt, dass die Injektionsdüse über die Anlage für den Leichtbauplattenbefestiger vorsteht. Der Adapter ist also beispielsweise als Kupplung auf die Injektionsdüse aufsteckbar ausgebildet, so dass die Injektionsdüse anstelle des zuvor erläuterten Injektionsfortsatzes über die Anlage des Adapters für den Leichtbauplattenbefestiger vorsteht.

Eine Ausgestaltung der Erfindung sieht vor, dass der Adapter mehrere gestaffelt angeordnete Aufnahmen zum dichten Ansetzen verschiedener Injektionsdüsen aufweist. Die Aufnahmen sind beispielsweise axial hintereinander und gleichachsig im Adapter angeordnet. Dadurch lassen sich verschiedene Injektionsdüsen dicht am Adapter ansetzen.

Die Erfindung wird nachfolgend anhand in der Zeichnung dargestellter Ausführungsbeispiele näher erläutert. Die Figuren zeigen Ausführungsformen der Erfindung im Achsschnitt.

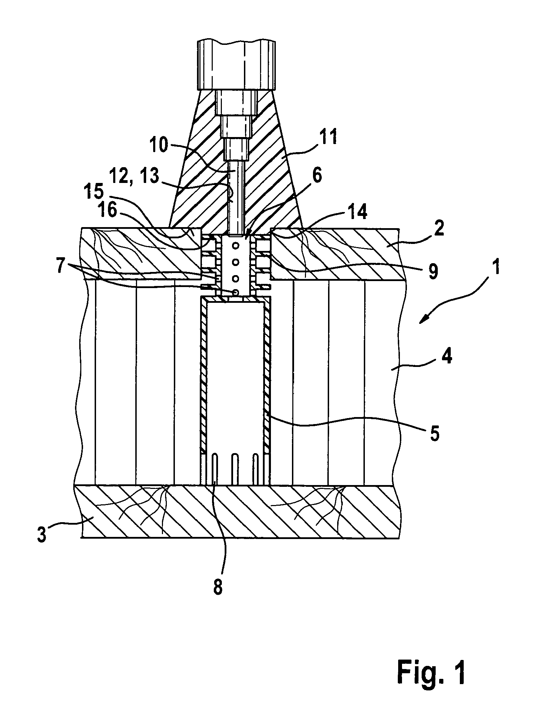

In Figur 1 ist eine Leichtbauplatte 1 zu sehen, die zwei Deckplatten 2, 3 aufweist zwischen denen eine Zwischenschicht angeordnet ist, der die beiden Deckplatten 2, 3 verbindet. Im Ausführungsbeispiel weist die Zwischenschicht 4 Waben auf, die Leichtbauplatte 1 ist also eine Wabenplatte. Durch eine der beiden Deckplatten 2 ist ein Loch in die Zwischenschicht 4 gebohrt und ein Leichtbauplattenbefestiger 5 eingesetzt. Der Leichtbauplattenbefestiger 5 ist ein rohrförmiges Element aus Kunststoff, dessen eines offene Stirnende eine Klebstoffeinfüllöffnung 6 bildet. Der Leichtbauplattenbefestiger 5 weist an verschiedenen Stellen, insbesondere im Bereich der durchbohrten Deckplatte 2 und vorzugsweise auch im Bereich seines anderen Stirnendes, also an oder nahe der nicht durchbohrten Deckplatte 3, Klebstoffaustrittsöffnungen 7, 8 auf, durch die Klebstoff, der durch die Klebstoffeinfüllöffnung 6 in den Leichtbauplattenbefestiger 5 eingebracht wird, austritt. Der aus den Klebstoffaustrittsöffnungen 7, 8 austretende Klebstoff verklebt den Leichtbauplattenbefestiger 5 mit der Leichtbauplatte 1, insbesondere mit den Deckplatten 2, 3. Es sind weitere Klebstoffaustrittsöffnungen im Bereich der Zwischenschicht 4 möglich (nicht dargestellt), um den Leichtbauplattenbefestiger 5 auch mit der Zwischenschicht 4 zu verbinden und die Festigkeit der Zwischenschicht 4 im Bereich des Leichtbauplattenbefestigers 5 zu erhöhen. Der Leichtbauplattenbefestiger 5 bildet einen Befestigungspunkt, der durch die Verklebung mechanisch stabil in der Leichtbauplatte 1 verankert ist. Durch Eindrehen einer nicht dargestellten Schraube, beispielsweise einer Holzschraube, kann die Leichtbauplatte 1 mit einer weiteren Leichtbauplatte verbunden oder es kann ein anderes Bauteil an der Leichtbauplatte 1 befestigt werden.

Der in Figur 1 dargestellte Leichtbauplattenbefestiger 5 weist umlaufende, ringscheibenförmige Rippen 9 im Bereich der durchbohrten Deckplatte 2 auf. Es gibt allerdings andere Ausführungsformen von Leichtbauplattenbefestigern, wie beispielsweise die weiteren Figuren zeigen.

Das Einbringen von Klebstoff oder auch einer anderen, aushärtenden Masse in den Leichtbauplattenbefestiger 5 erfolgt durch eine Injektionsdüse 10, die beispielsweise auch ein Statikmischer sein kann. Ein Statikmischer dient zum Mischen von zwei oder mehr Komponenten eines Zwei- oder Mehrkomponenten-Klebstoffs. In dem in Figur 1 dargestellten Ausführungsbeispiel der Erfindung ist ein Adapter 11 zum Einbringen des Klebstoffs aus der Injektionsdüse 10 in den Leichtbauplattenbefestiger 5 vorgesehen. Der Adapter 11 weist die Form eines Kegelstumpfs auf, was allerdings nicht zwingend ist. Außerdem weist der Adapter 11 eine Aufnahme 12 zum dichten Ansetzen der Injektionsdüse 10 auf. Die Aufnahme 12 kann unterschiedliche Gestaltungen haben, die auch abhängig von der jeweiligen Injektionsdüse 10 ist. In Figur 1 ist die Aufnahme 12 als axiales, durchmessergestuftes Durchgangsloch 13 ausgebildet, das kongruent zur Injektionsdüse 10 ist. Der Adapter 11 ist nach Art einer Kupplung einer Steckverbindung auf die Injektionsdüse 10 aufgesetzt, die als Stecker der Steckverbindung aufgefasst werden kann. Dabei bildet das Durchgangsloch 13 wie erwähnt eine an der Injektionsdüse 10 abdichtende Aufnahme 12 für die Injektionsdüse 10.

Eine Stirnseite des Adapters 11 weist eine Ringstufe 14 auf, so dass zwei konzentrische, ringscheibenförmige Flächen 15, 16 gebildet sind, in deren Mitte das die Aufnahme 12 bildende Durchgangsloch 13 mit der Injektionsdüse 10 mündet. Die äußere ringscheibenförmige Fläche bildet eine Anlage 15 für die Leichtbauplatte 1, die innere ringscheibenförmige Fläche bildet eine Anlage 16 für den Leichtbauplattenbefestiger 5.

Zum Einbringen von Klebstoff in den Leichtbauplattenbefestiger 5 wird, wie in Figur 1 dargestellt, der auf die Injektionsdüse 10 gesteckte Adapter 11 auf die Leichtbauplatte 1 und den Leichtbauplattenbefestiger 5 aufgesetzt. Dabei sitzt die Anlage 15 für die Leichtbauplatte 1 auf einem das Loch umgebenden Rand der durchbohrten Deckplatte 2 der Leichtbauplatte 1 und die Anlage 16 für den Leichtbauplattenbefestiger 5 auf dem Leichtbauplattenbefestiger 5 auf. Da die Anlage 16 für den Leichtbauplattenbefestiger 5 aufgrund der Ringstufe 14 über die Anlage 15 für die Leichtbauplatte 1 vorspringt, drückt die Anlage 16 für den Leichtbauplattenbefestiger 5 den Leichtbauplattenbefestiger 5 versenkt in das Loch in der Deckplatte 2 und hält den Leichtbauplattenbefestiger 5 während des Einbringens von Klebstoff in dieser Position. Der Adapter 11 verhindert, dass der Leichtbauplattenbefestiger 5 von dem eingebrachten Klebstoff aus der Leichtbauplatte 1 verdrängt wird. Außerdem dichtet der Adapter 11 mit seiner Anlage 16 am Leichtbauplattenbefestiger 5 und mit seiner Anlage 15 an der Deckplatte 2 der Leichtbauplatte 1 ab, so dass kein Klebstoff aus dem Loch in der Deckplatte 2 der Leichtbauplatte 1 austritt.

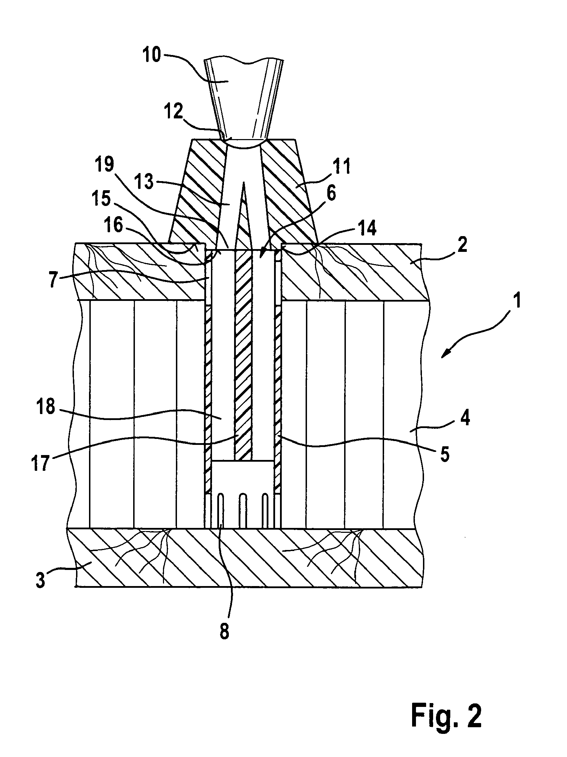

Zur Vermeidung von Wiederholungen werden bei der nachfolgenden Erläuterung der Figuren 2 bis 5 im Wesentlichen nur die Unterschiede der weiteren Figuren zu Figur 1 erläutert und im Übrigen wird auf die vorstehenden Ausführungen zu Figur 1 verwiesen. Gleiche Bauteile erhalten in allen Figuren gleiche Bezugszahlen.

In Figur 2 weist der Leichtbauplattenbefestiger 5 einen stiftförmigen, axialen Kern 17 auf, der durch Längsrippen 18 im Leichtbauplattenbefestiger 5 gehalten ist. Der Kern 17 hält eine Längsmitte des Leichtbauplattenbefestigers 5 frei von Klebstoff, um das Einschrauben einer Schraube nach Aushärten des Klebstoffs ohne Vorzubohren zu ermöglichen und zu erleichtern. Beim Einschrauben der Schraube wird der Kern 17 zerstört.

Als Aufnahme 12 weist der Adapter 11 in Figur 2 eine hohlrunde Ansenkung auf, an der die Injektionsdüse 10 mit ihrer Mündung angesetzt wird. Durch Druck der Injektionsdüse 10 gegen die Aufnahme 12 wird eine ausreichende Abdichtung bewirkt, um den Austritt von Klebstoff zu vermeiden. Eine Ansenkung als Aufnahme 12 für die Injektionsdüse 10 ist universeller als das Durchgangsloch 13 des Adapters 11 aus Figur 1. An der als Ansenkung ausgebildeten Aufnahme 12 des Adapters 11 aus Figur 2 können unterschiedliche Injektionsdüsen 10 mit verschiedenen Durchmessern angesetzt werden. Denkbar ist beispielsweise auch eine konische Ansenkung als Aufnahme 12 (nicht dargestellt).

Ausgehend von der Aufnahme 12 verzweigen sich mehrere Durchgangslöcher 13, die exzentrisch auf einem gedachten Kreis um die Mitte der Anlage 16 des Adapters 11 für den Leichtbauplattenbefestiger 5 münden. Der Adapter 11 aus Figur 2 weist somit eine Anzahl exzentrischer Klebstoffaustrittsöffnungen 19 auf, durch die Klebstoff außerhalb des Kerns 17 in den Leichtbauplattenbefestiger 5 strömt.

Im Übrigen ist der in Figur 2 dargestellte Adapter 11 gleich ausgebildet wie derjenige aus Figur 1, seine Funktion und Verwendung ist gleich.

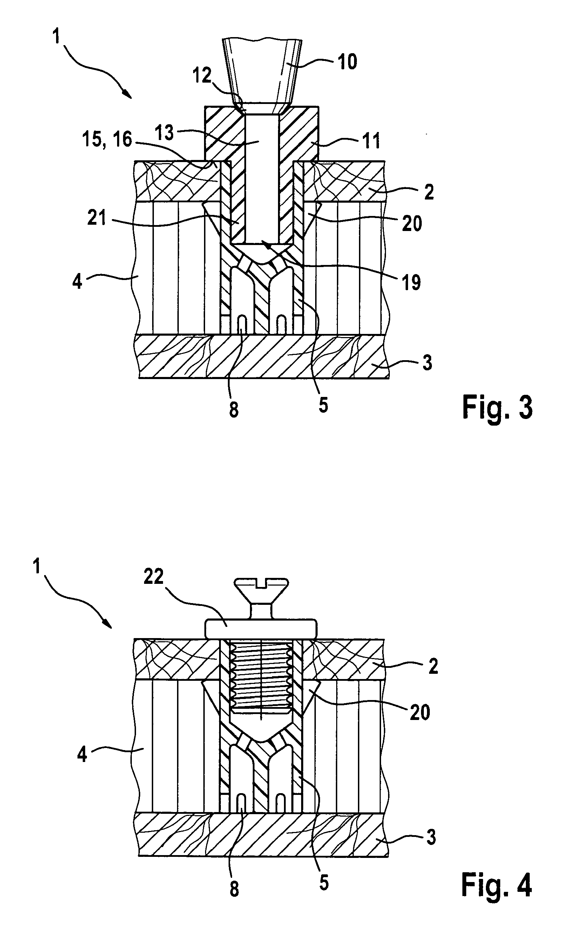

Der in Figur 3 dargestellte Leichtbauplattenbefestiger 5 weist widerhakenartige Sperrelemente 20 auf, die nach Durchtritt durch das Loch in der einen Deckplatte 2 der Leichtbauplatte 1 nach außen federn und die Deckplatte 2 dadurch hintergreifen. Der Leichtbauplattenbefestiger 5 ist auf diese Weise formschlüssig gegen Herausziehen an der Deckplatte 2 verankert.

Der Adapter 11 aus Figur 3 weist eine durchmesser-gestufte Zylinderform sowie ein axiales Durchgangsloch 13 zum Einbringen des Klebstoffs aus der Injektionsdüse 10 in den Leichtbauplattenbefestiger 5 auf. Wie in Figur 2 ist auch in Figur 3 die Aufnahme 12 zum dichten Ansetzen der Injektionsdüse 10 als hohlrunde oder konische Ansenkung ausgebildet.

In Figur 3 weist der Adapter 11 eine Ringscheibenfläche auf, die sowohl die Anlage 15 für die Leichtbauplatte 1 als auch die Anlage 16 für den Leichtbauplattenbefestiger 5 bildet. In Figur 3 hält der Adapter 11 den Leichtbauplattenbefestiger 5 also bündig mit der Deckplatte 2 der Leichtbauplatte 1. Die Dichtwirkung gegen Austritt von Klebstoff ist unverändert gewährleistet.

Im Unterschied zu Figuren 1 und 2 weist der Adapter 11 aus Figur 3 einen rohrförmigen, axialen Fortsatz 21 auf, der über die Anlage 15, 16 für die Leichtbauplatte 1 und den Leichtbauplattenbefestiger 5 vorsteht und im Gebrauch des Adapters 11 in den Leichtbauplattenbefestiger 5 hineinragt. Der Fortsatz 21 hält den Leichtbauplattenbefestiger 5 frei von Klebstoff, soweit der Fortsatz 21 in den Leichtbauplattenbefestiger 5 hineinragt. Die Länge des Fortsatz 21 ist abhängig von einer in den Leichtbauplattenbefestiger 5 einzuschraubenden Schraube.

Nach dem Einbringen des Klebstoffs in den Leichtbauplattenbefestiger 5 wird der Adapter 11 herausgezogen und es kann eine Schraube in den vom Fortsatz 21 des Adapters 11 geschaffenen Freiraum im Leichtbauplattenbefestiger 5 eingeschraubt werden. Wie zu sehen kann eine spitzenlose Schraube, deren vorderes Ende stumpf ist, sowie eine Schraube mit großem Gewinde- und Gewindekerndurchmesser problemlos in den Leichtbauplattenbefestiger 5 eingeschraubt werden. Solche Schrauben mit einem konischen Schraubenkopf, die auch als Verbindungsbolzen bezeichnet werden, sind in der Möbelindustrie gebräuchlich.

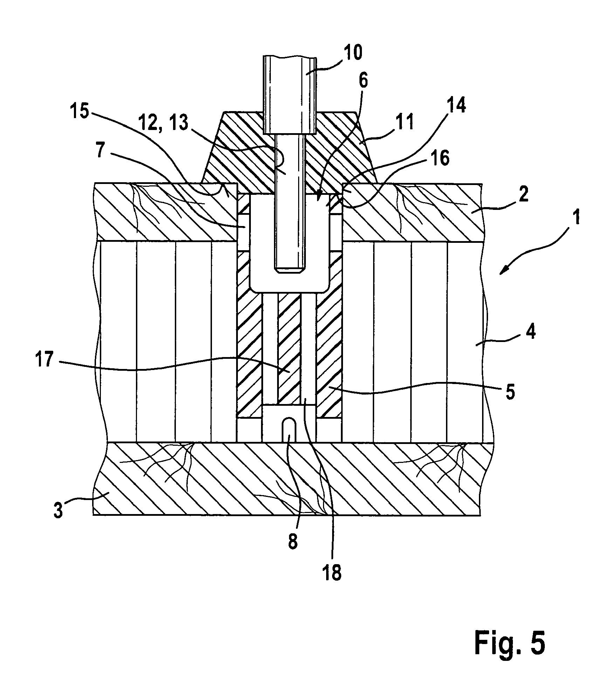

In Figur 5 ist der Adapter 11 wieder vergleichbar mit dem Adapter 11 aus Figur 1 als auf die Injektionsdüse 10 steckbare Kupplung ausgebildet; er weist ein durchmessergestuftes, axiales Durchgangsloch 13 als Aufnahme 12 für die Injektionsdüse 10 auf, in dem die Injektionsdüse 10 dichtend einliegt, wenn der Adapter 11 auf die Injektionsdüse 10 gesteckt ist.

Die ringscheibenförmigen Anlagen 15, 16 für die Leichtbauplatte 1 und den Leichtbauplattenbefestiger 5 sind vorhanden, durch eine Ringstufe 14 springt die Anlage 16 für den Leichtbauplattenbefestiger 5 vor gegenüber der sie umgebenden Anlage 15 für die Leichtbauplatte 1. Der Adapter 11 aus Figur 5 ist also wieder zum versenkten Halten des Leichtbauplattenbefestigers 5 vorgesehen.

Die Injektionsdüse 10 steht über die Anlage 16 für den Leichtbauplattenbefestiger 5 vor, so dass die Injektionsdüse 10 in den Leichtbauplattenbefestiger 5 hineinragt, wenn sie mit dem aufgesteckten Adapter 11 an der Leichtbauplatte 1 und im Leichtbauplattenbefestiger 5 angesetzt ist. Wie der Fortsatz 21 des Adapters 11 aus Figur 3 bildet die aus dem Adapter 11 vorstehende und in den Leichtbauplattenbefestiger 5 hineinragende Injektionsdüse 10 einen axialen Freiraum im Leichtbauplattenbefestiger 5, um eine nicht dargestellte Schraube ohne Vorbohren in den Klebstoff im Leichtbauplattenbefestiger 5 einschrauben zu können, auch wenn der Klebstoff ausgehärtet ist. Im Unterschied zum Fortsatz 21 in Figur 3, der innen am Leichtbauplattenbefestiger 5 anliegt und dadurch in dem von ihm eingenommenen Bereich keinen Klebstoff an die Innenseite einer Wandung des Leichtbauplattenbefestigers 5 gelangen lässt, weist die Injektionsdüse 10 in Figur 5 einen kleineren Durchmesser als der Innendurchmesser des Leichtbauplattenbefestigers 5 auf. Der in den Leichtbauplattenbefestiger 5 eingebrachte Klebstoff umfließt also die Injektionsdüse 10, so dass die nicht dargestellte Schraube in den Klebstoff eingeschraubt wird. Auch fließt der Klebstoff außen um die Injektionsdüse 10 zurück in Richtung der Klebstoffeinfüllöffnung 6 und tritt durch die Klebstoffaustrittsöffnungen 7 nahe der Klebstoffeinfüllöffnung 6 aus. Dadurch wird der Leichtbauplattenbefestiger 5 auch mit der durchbohrten Deckplatte 2 der Leichtbauplatte 1 verklebt. In gleicher Weise ist auch beim Adapter 11 aus Figur 3 ein Fortsatz 21 möglich, dessen Durchmesser kleiner als der Innendurchmesser des Leichtbauplattenbefestigers 5 ist.

In Verlängerung der Injektionsdüse 10 weist der Leichtbauplattenbefestiger 5 aus Figur 5 einen axialen, stiftförmigen Kern 17 auf, um die Schraube leicht und ohne Vorbohren in den Leichtbauplattenbefestiger 5 einschrauben zu können, auch wenn der Klebstoff im Leichtbauplattenbefestiger 5 ausgehärtet ist.

### Bezugszeichenliste

### Adapter zum Einbringen von Klebstoff aus einer Injektionsdüse in einen Leichtbauplattenbefestiger

- 1: Leichtbauplatte
- 2, 3: Deckplatte
- 4: Zwischenschicht
- 5: Leichtbauplattenbefestiger
- 6: Klebstoffeinfüllöffnung
- 7, 8: Klebstoffaustrittsöffnung
- 9: Rippe
- 10: Injektionsdüse
- 11: Adapter
- 12: Aufnahme
- 13: Durchgangsloch
- 14: Ringstufe
- 15: Anlage für Leichtbauplatte
- 16: Anlage für Leichtbauplattenbefestiger
- 17: Kern
- 18: Rippe
- 19: Klebstoffaustrittsöffnung
- 20: Sperrelement
- 21: Fortsatz
- 22: Schraube

## Patentansprüche

1. Adapter zum Einbringen von Klebstoff aus einer Injektionsdüse (10) in einen Leichtbauplattenbefestiger (5), **dadurch gekennzeichnet, dass** der Adapter (11) eine Aufnahme (12) zum dichten Ansetzen der Injektionsdüse (10), eine Anlage (16) für den Leichtbauplattenbefestiger (5) und eine Anlage (15) für die Leichtbauplatte (1) aufweist.

2. Adapter nach Anspruch 1, **dadurch gekennzeichnet, dass** die Anlage (16) für den Leichtbauplattenbefestiger (5) bündig mit der Anlage (15) für die Leichtbauplatte (1) ist oder über die Anlage (15) für die Leichtbauplatte (1) vorspringt.

3. Adapter nach Anspruch 1, **dadurch gekennzeichnet, dass** der Adapter (11) eine oder mehrere exzentrische Klebstoffaustrittsöffnungen (19) aufweist, durch die im Gebrauch Klebstoff aus dem Adapter (11) austritt und in den Leichtbauplattenbefestiger (5) eintritt.

4. Adapter nach Anspruch 1, **dadurch gekennzeichnet, dass** der Adapter (11) einen Injektionsfortsatz (21) mit einer Klebstoffaustrittsöffnung (19) aufweist, der über die Anlage (16) für den Leichtbauplattenbefestiger (5) vorsteht.

5. Adapter nach Anspruch 1, **dadurch gekennzeichnet, dass** der Adapter (11) die Injektionsdüse (10) so aufnimmt, dass sie über die Anlage (16) für den Leichtbauplattenbefestiger (5) vorsteht.
